# EUROPEAN PATENT SPECIFICATION

(11) **EP 0 704 235 B1**
(45) Date of publication and mention of the grant of the patent: **19.08.1998**
(21) Application number: 94115284.5
(22) Date of filing: 28.09.1994
(51) Int. Cl.: B01D 46/24

(54) **Dust removing apparatus**
Apparat zur Entfernung von Staub
Appareil d'enlèvement de poussières

(43) Date of publication of application: 03.04.1996
(73) Proprietor: MITSUBISHI JUKOGYO KABUSHIKI KAISHA, Tokyo 100 (JP)
(72) Inventor: Kitagawa, Yuichiro, c/o Nagasaki Shipyard & Mach., Nagasaki-shi, Nagasaki-ken (JP); Ueda, Tetsuya, c/o Nagasaki Shipyard & Mach., Nagasaki-shi, Nagasaki-ken (JP); Fujino, Tetsuya, c/o Nagasaki Shipyard & Mach., Nagasaki-shi, Nagasaki-ken (JP); Nagashima, Kiyoshi, c/o Nagasaki Shipyard & Mach., Nagasaki-shi, Nagasaki-ken (JP)
(74) Representative: Henkel, Feiler, Hänzel

(56) References cited:
- EP-A- 0 554 886
- DE-A- 2 104 758
- DE-B- 2 309 666

## Description

### BACKGROUND OF THE INVENTION:

### 1. Field of the Invention:

The present invention relates to a dust removing apparatus of the type defined in the preamble portion of claim 1.

### 2. Description of the Prior Art:

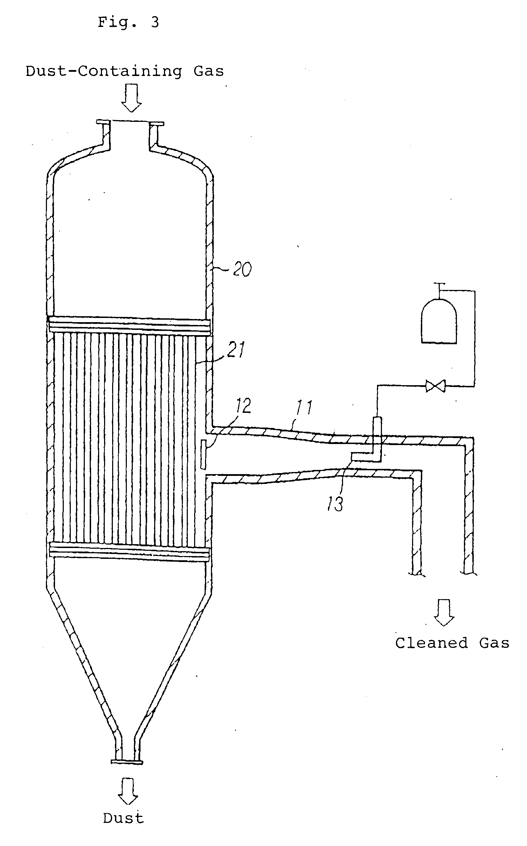

In a dust removing apparatus of the type that a plurality of filter tubes made of porous solid are disposed within a casing, a backwashing device for temporarily raising a pressure on the cleaned gas side is necessary in order to remove dust adhered to the filter tubes. To that end, in the prior art, for instance as shown in Fig. 3, backwashing of a plurality of filter tubes 21 within a casing 20 was performed by providing a single gas flow jet 13 within a cleaned air outlet pipe 11, making a jet flow ejected from the same gas flow jet 13 pass through a throat-shaped cleaned air outlet pipe 11, thereby suppressing a gas flow opposed to the jet flow, and raising a pressure of the cleaned gas. In addition, in order to prevent pressure impacts and thermal impacts caused by the backwashing jet flow from being applied to the filter tubes 21 made of porous solid, an impact preventing device 12 was disposed in the proximity of an opening of the cleaned air outlet pipe 11 to the casing 20.

In the case of the backwashing device in a dust removing apparatus in the prior art shown in Fig. 3, while a gas flow opposed to a jet flow is stopped by the throat portion and thereby it is contemplated to improve an efficiency as a pressure raising device, during a normal operation period when the backwashing jet flow is not flowing out from the gas flow jet 13, a pressure loss at the throat portion becomes large as compared to the case where a straight pipe is used, and for instance, in the case where the cleaned gas is used in a gas turbine, lowering of an efficiency of the entire system would occur.

Furthermore, in the event that the gas used for the jet flow is a gas at a low temperature as compared to the cleaned gas, in order to prevent damage of the filter tubes caused by thermal impacts it is necessary to raise the temperature of the jet flow before it reaches the filter tubes.

A prior art dust removing apparatus disclosing the features of the preamble portion of claim 1 is described in DE-B-23 09 666. The backwashing device of this apparatus has a number of nozzles which are disposed on the outer circumference of the cleaned gas outlet jet pipe with their nozzle exits directed toward the side of the filter tubes. The exits of the nozzles are arranged such that the jet flows are guided along the inner side walls of the cleaned gas outlet pipe.

Another dust removing apparatus is known from EP-A-0 554 886.

### SUMMARY OF THE INVENTION:

It is the object of the present invention to provide a dust removing apparatus which provides for an efficient backwashing of the tubes made of a porous solid, in which thermal shocks during backwashing are avoided.

According to the present invention there is provided a dust removing apparatus comprising a casing; a plurality of filter tubes made of porous solid and accommodated within the casing; a dust-containing gas inlet for introducing a dust-containing gas into the casing; a cleaned gas outlet pipe for leading a cleaned gas out of the casing; and a backwashing device connected to said cleaned gas outlet pipe, said backwashing device comprising a plurality of gas flow nozzles disposed on the outer circumference of the cleaned gas outlet pipe such that their axes are directed towards the side of the filter tubes, characterized in that the axes of said gas flow nozzles are also disposed so as to be tangential to an imaginary circle C within said cleaned gas outlet pipe in order that the jet flows ejected from the gas flow nozzles revolve within the gas outlet pipe.

According to a preferred embodiment of the above featured dust removing apparatus the diameter of said imaginary circle (C) is chosen to be 1/5 to 1/2 of the diameter of the cleaned gas outlet pipe.

According to the invention, owing to the fact that at the time of backwashing of the filter tubes, gas flows are ejected from a plurality of gas flow jets disposed on the outer circumference of the cleaned gas outlet pipe towards the side of the filter tubes, the flow of cleaned gas is stopped by these gas flows, hence velocity energy of the gas flows is converted into pressure energy efficiently within a small space, and backwashing can be achieved effectively. In addition, since a straight pipe such as a straight circular pipe or the like can be used as the cleaned gas outlet pipe, a pressure loss in the cleaned gas outlet pipe at the time of normal operation when the backwashing gas flow is not flowing out from the gas flow jets can be reduced, and so, in the case of utilizing the cleaned gas, for instance, in a gas turbine, lowing of an efficiency of the entire system can be suppressed to minimum.

According to the present invention, owing to the fact that the backwashing gas flows ejected from the gas flow jets flow towards the side of the filter tubes while revolving within the cleaned gas outlet pipe, the flow of cleaned gas can be surely stopped. Also, as a result of the fact that the gas flows during backwashing would flow in a spiral manner within the cleaned gas outlet pipe while revolving, a traveling distance of the gas flow per unit length of the cleaned gas outlet pipe becomes long. Accordingly, it becomes possible to convert velocity energy into pressure energy more efficiently, and backwashing can be achieved effectively. In addition, as a result of the fact that the backwashing gas flows at a low temperature as compared to the cleaned gas revolve, mixing with the cleaned gas at a high temperature is promoted, and thermal impacts against the filter tubes made of ceramics material or the like can be mitigated.

The above-mentioned and other objects, features and advantages of the present invention will become more apparent by reference to the following description of one preferred embodiment of the invention taken in conjunction with the accompanying drawings.

### BRIEF DESCRIPTION OF THE DRAWINGS:

In the accompanying drawings:
Fig. 1 is a vertical cross-section view of one preferred embodiment of the present invention;
Fig. 2 is a schematic view showing the portion of jet nozzles and a ring header in the same preferred embodiment; and
Fig. 3 is a vertical cross-section view showing a dust removing apparatus in the prior art.

### DESCRIPTION OF THE PREFERRED EMBODIMENT:

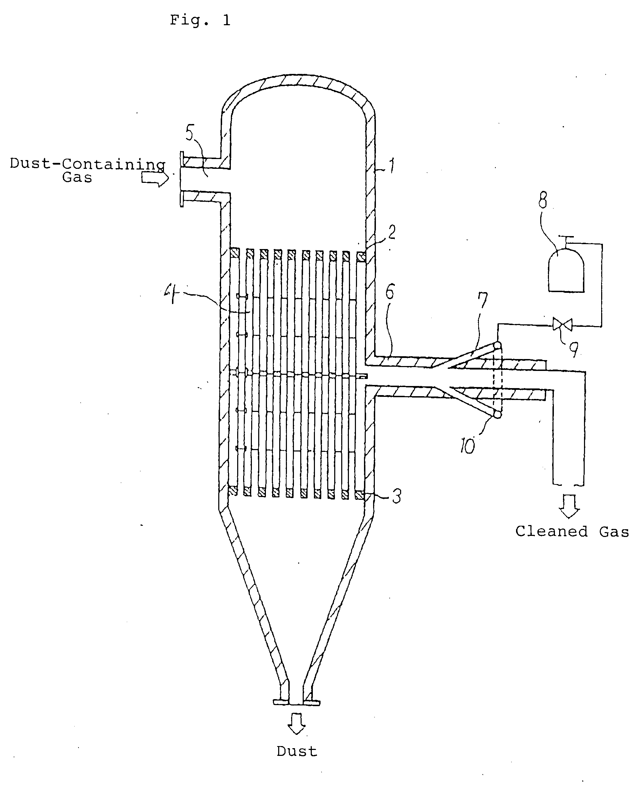

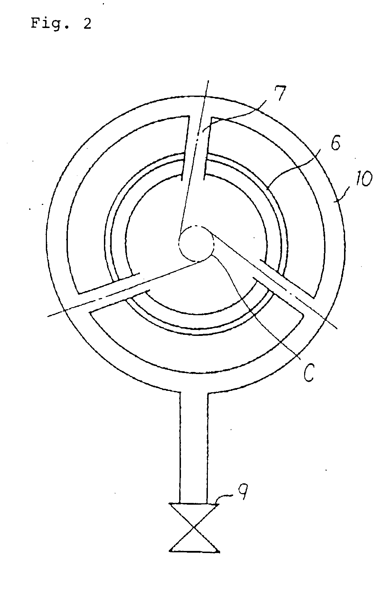

Now one preferred embodiment of the present invention will be described with reference to Figs. 1 and 2.

In Fig. 1, a casing 1 is made of steel plates lined with heat-insulating materials or refractory materials, and within the casing 1 are accommodated a plurality of filter tubes 4 having their top end portions and bottom end portions supported respectively by upper and lower partition plates 2 and 3 and disposed in parallel to one another as directed in the vertical direction.

The filter tube 4 is formed of a straight circular pipe of porous solid made of ceramics such as cordierite and its top end and bottom end are opened. As the ceramics to be used, those having excellent heat-resistance and impact-resistance such as cordierites or mullites are favorable.

At the upper portion of the casing 1 is formed a dust-containing gas inlet 5 for introducing a dust-containing gas at a high temperature, and this dust-containing gas inlet 5 is equipped in such manner that distribution of the dust-containing gas into the respective filter tubes 4 may become uniform. A dust-containing gas flowed into the casing 1 through the dust-containing gas inlet 5 enters to the insides of the filter tubes 4, then flows through the filter tubes 4 from their inside to their outside, also dust seized by the filter tubes 4 is accommodated in a hopper not shown after it has flowed down from the filter tubes 4 to the portion within the casing 1 under the filter tubes 4. Accordingly, the inside of the casing 1 is partitioned into a space for a dust-containing gas consisting of the portion above the upper partition plate 2 and the portion under the lower partition plate 3, and a space for a cleaned gas consisting of the portion between the partition plates 2 and 3 and outside of the filter tubes 4.

A cleaned gas outlet pipe 6 opens to the above-mentioned space for a cleaned gas at a nearly central portion in the vertical direction of the filter tubes 4 on the side surface of the casing 1, and is made of a straight circular pipe of steel lined with refractory materials, and it leads a cleaned gas, for instance, to a gas turbine or the like. To this cleaned gas outlet pipe 6 is connected a backwashing device as will be explained in the following. Jet nozzles 7 for backwashing gas flows open at the side surface of the cleaned gas outlet pipe 6, these jet nozzles 7 are connected to a high-pressure tank 8 via a ring header 10 and a control valve 9, and a backwashing device is composed of the above-described jet nozzles 7, ring header 10, control valve 9 and high-pressure tank 8.

As shown in Fig. 2, the above-described jet nozzles 7 are disposed in multiple about the cleaned air outlet pipe 6, one ends of the respective jet nozzles 7 open in the ring header 10, and the other ends of them open in the cleaned gas outlet pipe 6 as directed in oblique directions towards the side of the filter tubes 4, as shown in Fig. 1. In addition, as shown in Fig. 2, the axes of the respective jet nozzles 7 are disposed so as to be tangential to an imaginary circle C within the cleaned gas outlet pipe 6 in order that the jet flows ejected from the respective jet nozzles 7 may revolve within the outlet pipe 6. Preferably, the diameter of the imaginary circle C is chosen to be equal to 1/5 to 1/2 of the diameter of the cleaned gas outlet pipe 6.

In the illustrated embodiment constructed in the above-described manner, a dust-containing gas at a high temperature flowed into the casing 1 through the dust-containing gas inlet as shown by a white bold arrow enters into the respective filter tubes 4, when it flows from the inside of the filter tubes 4 towards its outside, it has its dust removed and becomes a cleaned gas, then it enters the cleaned gas outlet pipe 6 and flows through the cleaned gas outlet pipe 6 as shown by a white bold arrow. On the other hand, the dust seized by the filter tubes 4 falls in the same filter tubes 4, and thereafter it is accommodated in a hopper or the like (not shown in the drawings) as indicated by a white bold arrow.

At the time of backwashing the filter tubes 4, and the control valve 9 is opened, then a backwashing gas is fed from the high-pressure tank 8 through the control valve 9 and the ring header 10 to the jet nozzles 7, and gas flows are ejected from the jet nozzles 7 into the cleaned gas outlet pipe 6. Since the gas flows are ejected towards the side of the filter tubes 4 and also since it is ejected so as to be tangential to the above-described imaginary circle C, within the cleaned gas outlet pipe 6 are generated revolving flows directed towards the side of the filter tubes 4. Thereby a cleaned gas flow from the filter tubes 4 is stopped, and also owing to the above-described revolving flows, a traveling distance of a gas flow per unit length of the cleaned gas outlet pipe 6 becomes long. Accordingly, velocity energy of gas flows can be efficiently converted into pressure energy in a small space, and backwashing of filter tubes 4 can be carried out effectively.

Furthermore, since a straight circular pipe is used for the cleaned air outlet pipe 6, a pressure loss at the time of normal operation when gas flows are not ejected from the jet nozzles 7 can be reduced as compared to the case where the outlet pipe has a throat portion, and so, lowering of an efficiency of an entire dust removing apparatus can be suppressed.

Moreover, as a result of the fact that the backwashing gas flows at a low temperature as compared to the cleaned gas form revolving gas flows, mixing of the backwashing gas with the cleaned gas at a high temperature is promoted, and so, a thermal impact against the filter tubes 4 can be mitigated.

As will be apparent from the detailed description of the preferred embodiment above, according to the present invention as specified in Claim 1, owing to the fact that a plurality of gas flow jets directed towards the side of the filter tubes are disposed on the outer circumference of the cleaned gas outlet pipe, the flow of the cleaned gas within the cleaned gas outlet pipe can be reliably stopped, hence velocity energy of the backwashing gas flows can be efficiently converted into pressure energy, and so, effective backwashing can be achieved.

In addition, according to the present invention, since it becomes possible to use a straight pipe as the cleaned gas outlet pipe, the cost is reduced as compared to the case where the outlet pipe has a throat portion, and also, a pressure loss in the cleaned gas outlet pipe at the time of a normal operation other than the time of backwashing can be lowered.

Furthermore, according to the present invention, in addition to the above-described advantages, as a result of the fact that the backwashing gas flows ejected from the gas flow jets flow while revolving within the cleaned gas outlet pipe, mixing of low-temperature backwashing gas flows and high-temperature cleaned gas flows is promoted, and so, it is possible to efficiently backwash the filter tubes made of a porous solid without applying thermal impacts thereto.

## Claims

1. A dust removing apparatus comprising
a casing (1);
a plurality of filter tubes (4) made of porous solid and accommodated within the casing;
a dust-containing gas inlet (5) for introducing a dust-containing gas into the casing (1);
a cleaned gas outlet pipe (6) for leading a cleaned gas, which has passed through the filter tubes (4), out of the casing (1); and
a backwashing device connected to said cleaned gas outlet pipe (6), said backwashing device comprising a plurality of gas flow nozzles (7) disposed on the outer circumference of the cleaned gas outlet pipe (6) such that their axes are directed towards the side of the filter tubes (4),
characterized in that
the axes of said gas flow nozzles (7) are also disposed so as to be tangential to an imaginary circle (C) within said cleaned gas outlet pipe (6) in order that the jet flows ejected from the gas flow nozzles (7) revolve within the gas outlet pipe (6).

2. The dust removing apparatus of claim 1, characterized in that the diameter of said imaginary circle (C) is chosen to be 1/5 to 1/2 of the diameter of the cleaned gas outlet pipe (6).

## Patentansprüche

1. Apparat zur Entfernung von Staub, umfassend:
ein Gehäuse (1),
eine Vielzahl aus porösem Feststoff hergestellter und im Gehäuse untergebrachter Filterrohre (4),
einen Einlaß (5) für staubhaltiges Gas zum Einleiten staubhaltigen Gases in das Gehäuse (1),
eine Auslaßleitung (6) für gereinigtes Gas zum Ableiten eines gereinigten Gases, das die Filterrohre (4) durchströmt hat, aus dem Gehäuse (1), sowie
eine Rückspülungseinrichtung, die mit der Auslaßleitung (6) für gereinigtes Gas verbunden ist, wobei die Rückspülungseinrichtung eine Vielzahl am Außenumfang der Auslaßleitung (6) für gereinigtes Gas derart angeordneter Gasströmungsdüsen (7) aufweist, daß ihre Achsen zur Seite der Filterrohre (4) hin gerichtet sind,
dadurch gekennzeichnet, daß die Achsen der Gasströmungsdüsen (7) auch so angeordnet sind, daß sie tangential zu einem imaginären Kreis (C) innerhalb der Auslaßleitung (6) für gereinigtes Gas liegen, damit die aus den Gasströmungsdüsen (7) ausgestoßenen Strahlströme innerhalb der Gasauslaßleitung (6) kreisen.

2. Apparat zur Entfernung von Staub gemäß Anspruch 1, dadurch gekennzeichnet, daß der Durchmesser des imaginären Kreises (C) so gewählt ist, daß er 1/5 bis 1/2 des Durchmessers der Auslaßleitung (6) für gereinigtes Gas beträgt.

## Revendications

1. Un appareil d'enlèvement de poussières comportant
une enveloppe (1) ;
une pluralité de tubes de filtre (4) réalisés en une matière pleine poreuse et logés à l'intérieur de l'enveloppe ;
une entrée (5) de gaz contenant des poussières, pour introduire un gaz contenant des poussières dans l'enveloppe (1) ;
une conduite (6) de sortie du gaz nettoyé, pour conduire un gaz nettoyé, qui a traversé les tubes de filtre (4), hors de l'enveloppe (1) ; et
un dispositif de nettoyage à contre-courant relié à ladite conduite (6) de sortie du gaz nettoyé, ledit dispositif de nettoyage à contre-courant comportant une pluralité de buses (7) d'écoulement de gaz disposées sur la circonférence extérieure de la conduite (6) de sortie du gaz nettoyé de telle manière que leurs axes soient dirigés du côté des tubes de filtre (4),
caractérisé en ce que
les axes desdites buses (7) d'écoulement de gaz sont disposés, de plus, de manière à être tangents à un cercle imaginaire (C) intérieur à ladite conduite (6) de sortie du gaz nettoyé de sorte que les écoulements en jet projetés à partir des buses (7) d'écoulement de gaz tournent à l'intérieur de la conduite (6) de sortie de gaz.

2. L'appareil d'enlèvement de poussières de la revendication 1, caractérisé en ce que le diamètre dudit cercle imaginaire (C) est choisi pour être 1/5 à 1/2 du diamètre de la conduite (6) de sortie du gaz nettoyé.
